# FASCICULE DE BREVET EUROPEEN

(11) **EP 2 497 695 B1**
(45) Date de publication et mention de la délivrance du brevet: **18.12.2013**
(21) Numéro de dépôt: 12158868.5
(22) Date de dépôt: 09.03.2012
(51) Int. Cl.: B62D 1/16, B21D 51/06, B21D 53/88, F16C 3/02, B21C 37/15, B62D 51/06

(54) **Colonne de direction de véhicule automobile avec un tronçon d'arbre fermé par des languettes**
Kraftfahrzeug-Lenksäule mit einem durch Zungenverschluss gehaltenen Wellenabschnitt
Steering column of an automobile with a shaft section closed by tongues

(30) Priorité: 11.03.2011 FR 1152001
(43) Date de publication de la demande: 12.09.2012
(73) Titulaire: Fuji Autotech France SAS, 25350 Mandeure (FR)
(72) Inventeur: Houeix, Fabrice, 70400 Hericourt (FR)
(74) Mandataire: Blot, Philippe Robert Emile

(56) Documents cités:
- EP-A1- 0 502 761
- DE-A1- 1 530 971
- FR-A1- 2 491 854
- GB-A- 1 079 160

## Description

La présente invention concerne en général les colonnes de direction pour véhicules automobiles.

Plus précisément, l'invention concerne selon un premier aspect une colonne de direction pour véhicules automobiles, du type comprenant :
- un arbre de direction de forme allongée suivant une direction longitudinale, lié par une extrémité longitudinale supérieure à un volant de direction et prévu pour être lié par une extrémité longitudinale inférieure à un organe de commande de l'orientation des roues du véhicule ;
- un dispositif de guidage en rotation de l'arbre de direction par rapport au châssis du véhicule autour d'un axe longitudinal.

Une telle colonne de direction est connue par exemple de FR 2 408 500, qui décrit un arbre de direction comportant un arbre supérieur lié au volant et un arbre inférieur, les arbres supérieur et inférieur étant liés l'un à l'autre par un joint de cardan intermédiaire. L'arbre inférieur est lié à la crémaillère prévue pour commander l'orientation des roues du véhicule par l'intermédiaire d'un joint de cardan inférieur. L'arbre inférieur comporte deux parties montées de manière télescopique l'une dans l'autre, de manière à pouvoir ajuster la longueur de la colonne de direction. Par ailleurs, l'arbre inférieur comporte des chapes à ses deux extrémités, destinées chacune à coopérer avec une chape complémentaire en vue de constituer le joint de cardan intermédiaire et le joint de cardan inférieur. Ces chapes sont rapportées sur l'arbre inférieur par un système à vis.

Ainsi, l'arbre inférieur a une structure complexe, et est coûteux à fabriquer.

Dans ce contexte, l'invention vise à proposer une colonne de direction qui soit de fabrication moins coûteuse.

A cette fin, l'invention porte sur une colonne de direction du type précité, **caractérisée en ce que** l'arbre de direction comprend au moins un premier tronçon d'arbre longitudinal ayant une partie formant un canal creux présentant une ouverture latérale tournée suivant une direction latérale, l'ouverture étant délimitée par deux bords longitudinaux comme divulgué en FR 2 491 854, le premier tronçon d'arbre comprenant en outre une pluralité de languettes chacune solidaire d'un des deux bords longitudinaux et s'étendant à travers l'ouverture jusqu'à l'autre bord longitudinal.

Un tel tronçon d'arbre présente plusieurs avantages.

Il peut être obtenu par pliage d'une plaque métallique.

D'autre part, sur certains véhicules automobiles, le volume réservé pour le passage de l'arbre de direction, notamment pour le passage de la partie inférieure de l'arbre de direction, est extrêmement limité. L'arbre de direction doit alors présenter une section réduite, au moins dans certaines zones. Par exemple, le premier tronçon d'arbre de direction doit présenter une section externe dont la plus grande dimension est inférieure à 40 mm et encore de préférence inférieure à 30 mm. Par exemple, la plus grande dimension de la section doit être égale à 25 mm environ. Par ailleurs, pour conférer à l'arbre de direction une résistance mécanique suffisante, le premier tronçon doit être fabriqué à partir d'une plaque de métal assez rigide, ayant par exemple une épaisseur comprise entre 4 et 10 mm, et valant par exemple 6 mm. Il n'est pas techniquement possible de plier une tôle d'épaisseur 6 mm de manière à constituer un tronçon à section fermée, parallélépipédique ou sensiblement parallélépipédique, de diamètre extérieur maximum valant par exemple 24 mm.

Ainsi, il est seulement techniquement possible de plier la plaque métallique de manière à former une section en U, une telle pièce ayant la forme d'un canal présentant une ouverture latérale sur toute sa longueur longitudinale.

Cette pièce présente une résistance mécanique à la torsion insuffisante.

L'ajout de languettes solidaires des bords longitudinaux de la partie formant canal en creux, et rabattues à travers l'ouverture jusqu'au bord longitudinal opposé, permet d'augmenter la résistance à la torsion du premier tronçon. Il est techniquement possible de plier une plaque métallique d'épaisseur comprise entre 4 et 10 mm, pour obtenir une pièce creuse ayant une section sensiblement fermée dont la plus grande dimension est inférieure à 25 mm, quand un des côtés de la pièce est constitué de languettes. Chaque languette ne s'étend longitudinalement que sur une faible fraction de la longueur du premier tronçon et n'offre qu'une faible résistance au pliage. Au contraire, il serait impossible de plier un côté qui s'étende d'une pièce sur toute la longueur longitudinale du premier tronçon à la place des languettes.

La partie formant canal en creux peut présenter toute sorte de section perpendiculairement à la direction longitudinale. Typiquement, cette partie présente une section en U, à fond plat ou à fond partiellement arrondi. En variante, ladite partie formant canal présente une section en arc de cercle, par exemple une section semi-circulaire.

Les languettes sont typiquement disposées côte à côte suivant la direction longitudinale. Plus précisément, les languettes sont juxtaposées longitudinalement, les unes à côté des autres. Elles sont sensiblement parallèles les unes aux autres. Elles s'étendent chacune à partir d'un des bords longitudinaux vers l'autre bord longitudinal, suivant une direction générale sensiblement perpendiculaires à la direction longitudinale et à la direction transversale.

Chaque languette présente ainsi une première extrémité solidaire d'un des deux bords longitudinaux, et une autre extrémité opposée à la première, libre par rapport à la partie formant canal. Cette seconde extrémité libre est plaquée contre le bord longitudinal opposé, ou est située immédiatement au-dessus de ce bord.

L'extrémité libre recouvre par exemple toute la largeur du bord longitudinal opposé. Ceci permet d'augmenter la rigidité du premier tronçon. En variante, l'extrémité libre ne recouvre pas le bord longitudinal opposé sur toute sa largeur. Ceci permet de réduire la taille de la section du premier tronçon.

De préférence, les languettes sont alternativement solidaires de l'un des deux bords longitudinaux et de l'autre des deux bords longitudinaux. Les languettes sont ainsi disposées alternativement en sens inverse les unes des autres, ou encore tête bêche. En variante, deux languettes peuvent être disposées dans le même premier sens, suivies par deux languettes disposées dans le sens opposé, suivies de nouveau par deux languettes dans le premier sens, etc.... Il est également envisageable de disposer deux languettes orientées dans un premier sens puis une languette dans le sens opposé puis de nouveau deux languettes dans le premier sens etc....

Les languettes sont en contact les unes avec les autres. Ceci permet de conférer une bonne rigidité au premier tronçon, notamment vis-à-vis d'efforts de torsion. En effet, quand un effort de torsion autour de l'axe longitudinal est appliqué au premier tronçon, ledit effort tend à faire pivoter les languettes liées à un premier bord longitudinal vers une première extrémité du premier tronçon, alors que les languettes liées au second bord ont tendance à pivoter vers la seconde extrémité du premier tronçon. Ces différents mouvements sont entravés par les languettes venant en contact les unes avec les autres, le mouvement des languettes lié au premier bord étant bloqué par le mouvement des languettes lié au second bord et réciproquement.

En variante, les languettes sont légèrement espacées les unes des autres. Il peut alors se produire une déformation par torsion limitée du premier tronçon, avant que les languettes ne viennent en contact les unes avec les autres et bloquent ou limitent la déformation.

Typiquement, chaque languette présente une surface libre latérale tournée vers la première extrémité longitudinale du premier tronçon et une autre surface libre latérale tournée vers la seconde extrémité longitudinale du premier tronçon. Chaque languette est en contact par ses surfaces latérales avec les surfaces latérales des deux languettes qui l'encadrent.

En l'absence de déformation, les languettes forment ainsi une paroi sensiblement continue fermant l'ouverture de la partie formant canal en creux.

Le premier tronçon comprend typiquement entre 4 et 12 languettes, de préférence entre 6 et 8 languettes.

L'arbre de direction comprend de préférence un arbre supérieur lié au volant, un arbre inférieur prévu pour être relié à l'organe de commande de l'orientation des roues du véhicule automobile et un joint de cardan intermédiaire liant les arbres inférieurs et supérieurs en rotation l'un à l'autre, le premier tronçon d'arbre faisant partie de l'arbre inférieur. L'organe de commande de l'orientation des roues du véhicule est typiquement une crémaillère. Le premier tronçon d'arbre en variante fait partie de l'arbre supérieur. L'arbre de direction selon une variante non préférée pourrait ne pas être subdivisé en deux parties raccordées l'une à l'autre par un joint de cardan.

Typiquement, le joint de cardan intermédiaire comprend une première chape venue de matières avec la partie formant canal creux et avec les languettes du premier tronçon. Il est alors particulièrement avantageux de fabriquer le premier tronçon par pliage d'une plaque de métal, les deux ailes opposées de la chape étant ainsi obtenues facilement.

Par ailleurs, sur certains véhicules automobiles, l'arbre inférieur est subdivisé en deux tronçons qui sont raccordés l'un à l'autre au moment du montage de la colonne de direction sur le véhicule automobile. Dans ce cas, l'arbre inférieur comprend de préférence un second tronçon d'arbre et une liaison liant en rotation les premier et second tronçons d'arbre l'un à l'autre, ladite liaison comportant au moins une seconde chape venue de matière avec la partie formant canal creux et avec les languettes du premier tronçon, cette seconde chape étant prévue pour recevoir une extrémité longitudinale du second tronçon d'arbre.

Comme souligné précédemment, il est dans ce cas particulièrement avantageux que le premier tronçon soit obtenu par pliage d'une plaque de métal. Il est ainsi particulièrement facile d'obtenir les deux ailes de la seconde chape, à partir de deux zones de la plaque de métal.

Le premier tronçon peut ne comporter que la première chape et pas la seconde chape, ou peut ne comporter que la seconde chape et pas la première chape, ou peut comporter les première et seconde chapes. En variante, il peut ne comporter aucune des deux chapes. Dans ce cas, les deux chapes sont rapportées sur le premier tronçon, par tous moyens adaptés.

Dans un exemple de réalisation, l'arbre inférieur est entièrement constitué par le premier tronçon. Dans un second exemple de réalisation, comme indiqué ci-dessus, l'arbre inférieur comporte un premier tronçon et un second tronçon liés l'un à l'autre de manière démontable. Dans ce cas, le premier tronçon s'étend de préférence sur une longueur longitudinale compris entre 25% et 75% de la longueur longitudinale totale de l'arbre inférieur, encore de préférence sur une longueur comprise entre 40 et 60% de la longueur longitudinale totale de l'arbre inférieur.

Dans une autre variante de réalisation, l'arbre inférieur est d'une pièce, et le premier tronçon ne s'étend que sur une partie de la longueur longitudinale de l'arbre inférieur. Le second tronçon dans ce cas peut être par exemple un canal creux de section plus importante que le premier tronçon, et dépourvu d'ouverture. Les deux tronçons sont venus de matière l'un avec l'autre.

Dans encore une autre variante, le premier tronçon comprend une chape venue de matière avec la partie formant canal creux et avec les languettes, prévue pour former un joint de cardan inférieur avec une chape complémentaire liée à l'organe de commande de l'orientation des roues du véhicule automobile. Dans cette variante de réalisation, le premier tronçon constitue une partie inférieure de l'arbre inférieur, ou s'étend sur toute la longueur de l'arbre inférieur.

L'invention porte selon un second aspect sur un procédé de fabrication d'une colonne de direction présentant les caractéristiques ci-dessus. Le procédé comprend notamment au moins les étapes suivantes, permettant de fabriquer le premier tronçon de l'arbre de direction :
- obtenir une plaque de métal sensiblement plane ;
- découper la plaque de métal de manière à créer une zone centrale délimitée par deux bords longitudinaux sensiblement parallèles l'un à l'autre, et une pluralité de languettes solidaires des bords longitudinaux ;
- plier la zone centrale de la plaque de métal découpée, de manière à obtenir la partie formant canal du premier tronçon d'arbre ;
- plier les languettes.

Ainsi, le premier tronçon est formé de manière particulièrement commode et économique.

Avantageusement, la plaque de métal est découpée de manière à comporter des zones qui, après pliage, vont former une ou plusieurs chapes. Ces chapes sont par exemple des éléments du joint de cardan intermédiaire, du joint de cardan inférieur, ou de la liaison entre le premier et le second tronçon de l'arbre inférieur. Il est ainsi particulièrement facile et économique de fabriquer un tronçon d'arbre de direction pourvu d'une ou plusieurs chapes.

Le procédé peut comporter d'autres étapes, en plus des étapes décrites ci-dessus. Ces étapes visent par exemple à réaliser des orifices dans les ailes des chapes. Elles peuvent également viser à déformer la plaque de métal, avant ou après découpe, avant ou après pliage de la zone centrale et des languettes, de manière à conférer au premier tronçon la forme recherchée.

La mise en forme de la plaque est réalisée par tout moyen adapté, par exemple par pliage et/ou par emboutissage.

D'autres caractéristiques et avantages en invention ressortiront de la description détaillée qui en est donnée ci-dessous, à titre indicatif et nullement limitatif, en référence aux figures annexées parmi lesquelles :
- la Figure 1 est une vue de côté, en élévation, d'une colonne de direction conforme à l'invention ;
- la Figure 2 est une figure en perspective du premier tronçon de la colonne de direction de la Figure 1 ;
- la Figure 3 est une vue en perspective d'un premier tronçon similaire à celui de la Figure 2, montrant le comportement de ce tronçon quand un effort de torsion lui est appliqué ; et
- la Figure 4 est une représentation schématique des deux premières étapes du procédé de fabrication de l'invention.

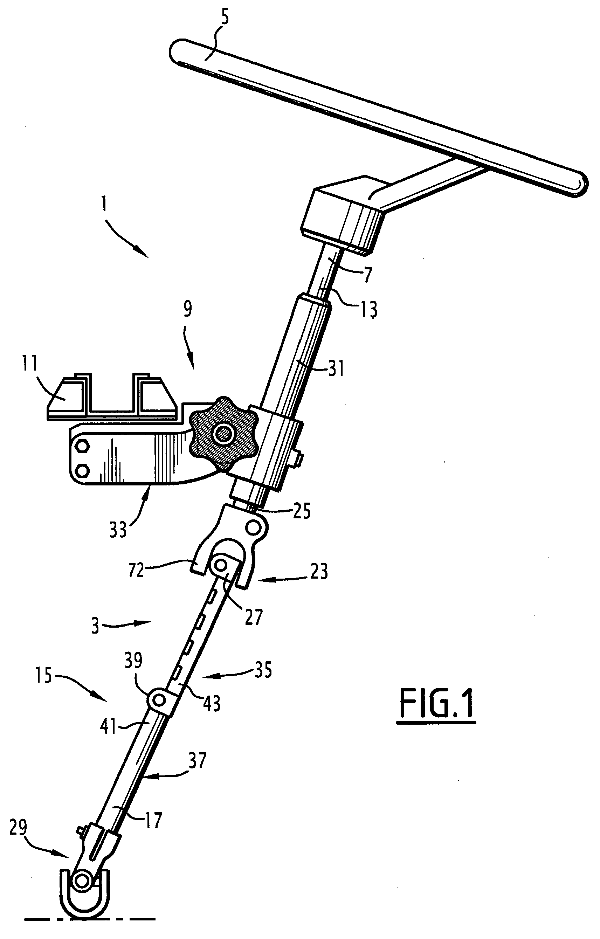

La colonne de direction 1 représentée sur la Figure 1 comprend :
- un arbre de direction 3 de forme allongée suivant une direction longitudinale ;
- un volant de direction 5 lié à une extrémité longitudinale supérieure 7 de l'arbre de direction ;
- un dispositif 9 de guidage en rotation de l'arbre de direction par rapport au châssis 11 du véhicule, autour d'un axe longitudinal.

L'arbre de direction 3 comprend un arbre supérieur 13, lié au volant 5, un arbre inférieur 15 prévu pour être raccordé par une extrémité longitudinale inférieure 17 à un organe (non représenté) de commande de l'orientation des roues du véhicule, et un joint de cardan intermédiaire 23 raccordant les arbres supérieurs et inférieurs l'un à l'autre. Le joint de cardan 23 lie en rotation une extrémité inférieure 25 de l'arbre supérieur à une extrémité supérieure 27 de l'arbre inférieur. L'extrémité inférieure 17 de l'arbre inférieur 15 est liée à la crémaillère de direction par l'intermédiaire d'un joint de cardan inférieur 29.

Le dispositif 9 de guidage en rotation de l'arbre de direction comporte un corps de colonne 31 de forme tubulaire, disposé autour de l'arbre supérieur 13, et un dispositif 33 adapté pour régler la position du corps de colonne 31 par rapport au châssis 11. Des roulements non représentés sont interposés entre le corps de colonne 31 et l'arbre de direction supérieur 13, de manière à guider ce dernier en rotation.

Le dispositif 33 est adapté pour permettre un réglage de la position de l'arbre de direction 3 en orientation et en profondeur, et pour permettre le verrouillage dudit corps de colonne et de la colonne de direction elle-même dans la position choisie.

L'arbre inférieur 15 comporte un premier tronçon longitudinal supérieur 35, un second tronçon longitudinal inférieur 37 et une liaison démontable 39 solidarisant les premier et second tronçons l'un à l'autre. Le second tronçon 37 est raccordé au joint de cardan inférieur 29. Il est raccordé par son extrémité 41 opposée au joint de cardan 29 à l'extrémité 43 du premier tronçon, par l'intermédiaire de la liaison 39.

Le premier tronçon, par son extrémité opposée à l'extrémité 43 est raccordé au joint de cardan intermédiaire 23.

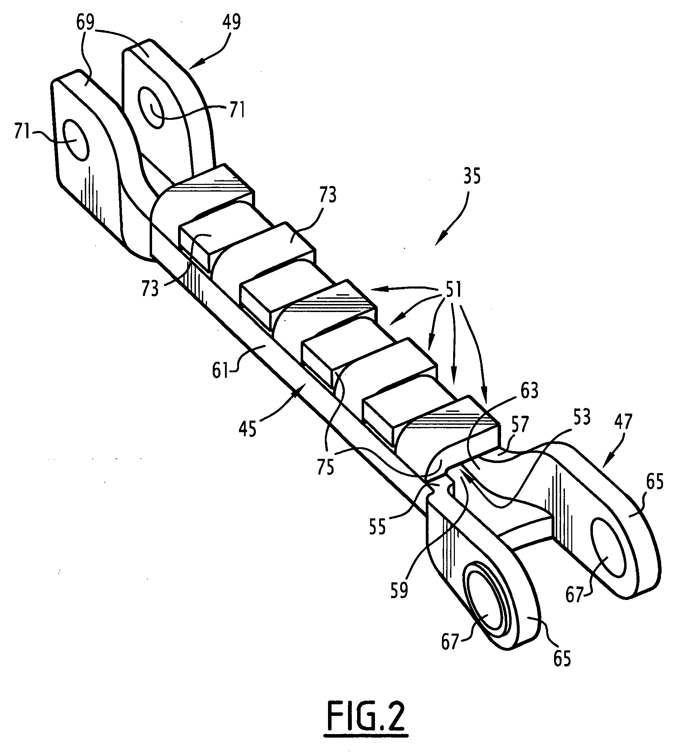

Le premier tronçon est représenté de manière plus détaillée sur la Figure 2.

Il comporte une partie 45 formant un canal creux, une première chape 47 venue de matière avec la partie 45, une seconde chape 49 venue de matière avec la partie 45, et des languettes 51 elles aussi venues de matière avec la partie 45. La partie 45 présente une ouverture 53 latérale, orientée suivant une direction latérale perpendiculaire à la direction longitudinale. L'ouverture s'étend sur toute la longueur de la partie 45. Elle est délimitée par deux bords longitudinaux 55 et 57, sensiblement parallèles entre eux. La partie 45 présente un fond 59 à l'opposé de l'ouverture 53 et deux parois latérales 61 et 63, solidaires du fond 59, et définissant les bords 55 et 57. Les chapes 47 et 49 prolongent longitudinalement la partie 45 à ses deux extrémités. La chape 47 présente deux ailes 65 parallèles l'une à l'autre et espacées l'une de l'autre, prolongeant les parois latérales 61 et 63 et ayant, sensiblement la même orientation que les parois 61 et 63. L'écartement entre les ailes 65 est légèrement supérieur à l'écartement entre les parois 61 et 63. Deux orifices 67 en vis-à-vis sont ménagés dans les parois 65. La structure de la seconde chape 49 est similaire, celle-ci comportant deux ailes 69 situées dans le prolongement des parois 61 et 63, et légèrement plus écartées l'une de l'autre que les parois 61 et 63. Les ailes 69 présentent deux orifices 71 en vis-à-vis l'un de l'autre.

La chape 47 coopère avec une chape complémentaire 72 solidaire de l'arbre supérieur pour former le joint de cardan intermédiaire 23.

La seconde chape 49 est prévue pour recevoir entre les deux ailes 69 l'extrémité 41 du second tronçon 37. Cette extrémité 41 est bloquée contre le fond 59 par tous moyens adaptés, par exemple par un boulon traversant les orifices 71 et sollicitant l'extrémité 41 contre le fond 59.

Les languettes 51 sont réparties longitudinalement le long de la partie 45. Elles sont sensiblement parallèles les unes aux autres, et s'étendent toutes suivant une direction perpendiculaires à la fois à la direction longitudinale et à la direction transversale. Elles sont alternativement solidaires du premier bord 55 et solidaires du second bord 57. Ainsi, les languettes 51 solidaires du premier bord 55 sont chacune encadrées par deux languettes 51 solidaires du second bord 57, et réciproquement.

Chaque languette 51 présente une première extrémité solidaire de l'un des deux bords 55, 57 et une extrémité libre 73 portant contre l'autre bord. Chaque languette 51 est délimitée vers les premier et second de chapes 47, 49 par deux faces latérales opposées 75, sensiblement perpendiculaires à la direction longitudinale. Chaque languette 51 est normalement en contact par ses faces 75 avec les faces 75 des deux languettes 51 qui l'encadrent. Du fait des tolérances de fabrication, les faces latérales 75 de chaque languette peuvent aussi être légèrement écartées des deux languettes qui l'encadrent.

Ainsi, deux languettes 51 voisines l'une de l'autre sont ainsi placées en vis-à-vis sur sensiblement toute leur longueur.

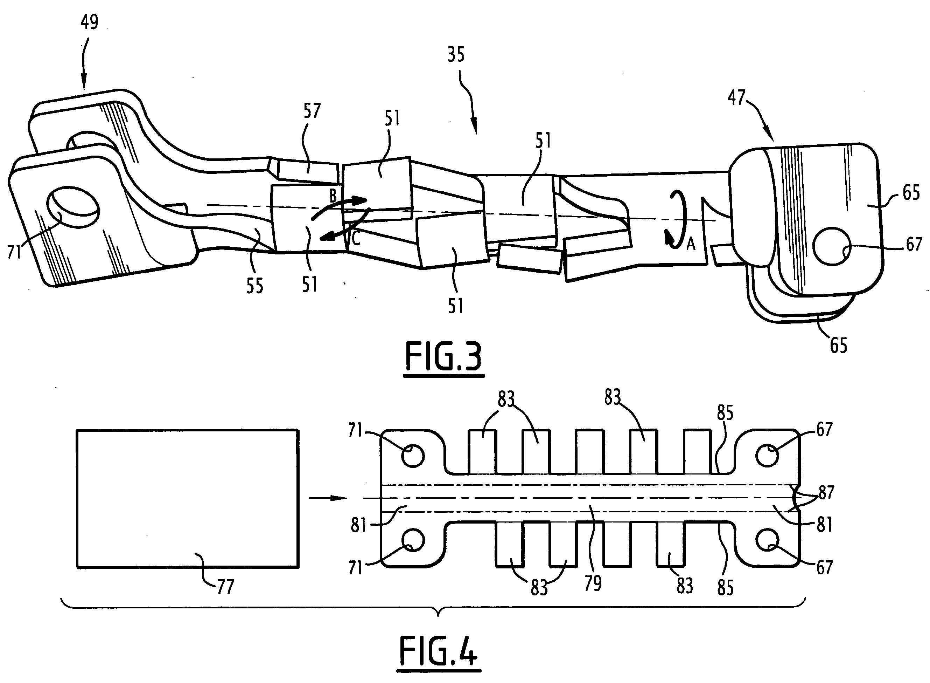

Le comportement du premier tronçon 35 lorsque ce tronçon est soumis à un effort de torsion autour de la direction longitudinale est représentée sur la Figure 3. Sur cette figure, on a représenté un premier tronçon similaire à celui de la Figure 2, ayant subi une contrainte de torsion telle que la première chape 47 est décalée de 90 degrés par rapport à la situation de la Figure 2. La contrainte de torsion appliquée à la chape 47 était orientée dans le sens représenté par la flèche A de la Figure 3. Les languettes 51 solidaires du premier bord longitudinal 55 pivotent dans le sens de la flèche B de la Figure 3. L'extrémité libre de ces languettes 51 tend à pivoter vers la chape 47. Au contraire, les languettes solidaires du second bord longitudinal 57 pivotent selon la flèche C de la Figure 3. Les extrémités libres de ces languettes tendent à pivoter vers la chape 49. Les languettes 51 solidaires du premier bord 55 sont ainsi en opposition par rapport aux languettes solidaires du second bord 57. Les languettes voisines l'une de l'autre viennent en appui l'une contre l'autre ce qui limite la torsion du premier tronçon.

Le procédé de fabrication d'un premier tronçon tel que décrit ci-dessus va maintenant être détaillé, en référence notamment à la figure 4.

Le premier tronçon 35 est fabriqué à partir d'une plaque de métal sensiblement plane 77. La plaque présente typiquement une épaisseur comprise entre 4 et 10 mm, et valant par exemple 6 mm.

La plaque de métal est ensuite découpée de manière à créer une zone centrale 79 destinée à constituer la partie formant canal, deux zones d'extrémité 81 destinées à constituer les chapes 47 et 49, et des zones latérales 83 destinées à constituer les languettes 51.

Au cours de cette étape de découpe, les orifices 67 et 71 sont également découpés.

La zone centrale est délimitée par deux bords longitudinaux 85 sensiblement parallèle à l'autre, les zones 83 destinées à former une languette étant solidaires des bords 85.

La découpe est réalisée par des moyens adaptés, par exemple par emboutissage.

La zone centrale 79 et les deux zones d'extrémité 81 sont ensuite pliées, autour de lignes de pliage longitudinales 87 matérialisées par des traits mixtes sur la figure 4.

Ce pliage permet de former la partie formant canal 45, et les deux chapes 47 et 49. Le pliage est réalisé autour d'un mandrin non représenté.

Après cette étape de pliage, les zones 83 destinées à former les languettes 51 sont situées dans deux plans parallèles l'un à l'autre. Ces plans sont parallèles aux ailes 69 et 65 des deux chapes, et parallèles aux parois latérales 61 de la partie formant canal.

Enfin, les languettes sont rabattues en travers de l'ouverture 53, jusqu'à ce que leurs extrémités 73 portent sur le bord opposé.

## Revendications

1. Colonne de direction pour véhicule automobile comprenant :
- un arbre de direction (3) de forme allongée suivant une direction longitudinale, lié par une extrémité longitudinale supérieure (7) à un volant de direction (5) et prévu pour être lié par une extrémité longitudinale inférieure (17) à un organe de commande de l'orientation des roues du véhicule automobile ;
- un dispositif (9) de guidage en rotation de l'arbre de direction (3) par rapport au châssis (11) du véhicule autour d'un axe longitudinal ;
l'arbre de direction (3) comprenant au moins un premier tronçon (35) d'arbre longitudinal ayant une partie (45) formant un canal creux présentant une ouverture latérale (53) tournée suivant une direction latérale, perpendiculaire à la direction longitudinale, l'ouverture (53) étant délimitée par deux bords longitudinaux (55, 57), **caractérisée en ce que** le premier tronçon d'arbre (35) comprend en outre une pluralité de languettes (51) chacune solidaire d'un des deux bords longitudinaux (55, 57) et s'étendant à travers l'ouverture (53) jusqu'à l'autre bord longitudinal (57, 55).

2. Colonne de direction selon la revendication 1, **caractérisée en ce que** les languettes (51) sont disposées côte à côte suivant la direction longitudinale et sont alternativement solidaires de l'un des deux bords longitudinaux (55, 57) et de l'autre des deux bords longitudinaux (57, 55).

3. Colonne de direction selon la revendication 2, **caractérisée en ce que** les languettes (51) sont en contact les unes avec les autres.

4. Colonne de direction selon l'une quelconque des revendications précédentes, **caractérisée en ce que** les languettes (51) sont venues de matière avec ladite partie (45) formant canal creux.

5. Colonne de direction selon l'une quelconque des revendications précédentes, **caractérisée en ce que** l'arbre de direction (3) comprend un arbre supérieur (13) lié au volant (5), un arbre inférieur (15) prévu pour être lié à l'organe de commande de l'orientation des roues du véhicule automobile et un joint de cardan intermédiaire (23) liant les arbres supérieur et inférieur (13, 15) en rotation l'un à l'autre, ledit premier tronçon d'arbre (35) faisant partie de l'arbre inférieur (15).

6. Colonne de direction selon la revendication 5, **caractérisée en ce que** le joint de cardan intermédiaire (23) comprend au moins une première chape (47) venue de matière avec ladite partie formant un canal creux (45) et avec les languettes (51) du premier tronçon (35).

7. Colonne de direction selon la revendication 5 ou 6, **caractérisée en ce que** l'arbre inférieur (15) comprend un second tronçon d'arbre (37) et une liaison (39) liant en rotation les premier et second tronçons d'arbre (35, 37) l'un à l'autre, ladite liaison (89) comprenant au moins une seconde chape (49) venue de matière avec ladite partie formant un canal creux (45) et avec les languettes (51) du premier tronçon (35), prévue pour recevoir une extrémité longitudinale (41) du second tronçon d'arbre (37).

8. Colonne de direction selon l'une quelconque des revendications 5 à 7, **caractérisée en ce que** le premier tronçon (35) s'étend sur une longueur longitudinale comprise entre 25% et 75% de la longueur longitudinale totale de l'arbre inférieur (15).

9. Procédé de fabrication d'une colonne de direction selon l'une quelconque des revendications précédentes, le procédé comprenant au moins les étapes suivantes :
- obtenir une plaque de métal (77) sensiblement plane ;
- découper la plaque de métal (77) de manière à créer une zone centrale (79) délimitée par deux bords longitudinaux (85) sensiblement parallèles l'un à l'autres, et une pluralité de zones latérales (83) solidaires des bords longitudinaux (85);
- plier la zone centrale (79) de la plaque de métal (77) découpée, de manière à obtenir la partie formant canal (45) du premier tronçon d'arbre (35);
- plier les zones latérales (83) pour former les languettes (51).

10. Procédé selon la revendication 9, **caractérisé en ce que** la plaque de métal (77) découpée comporte au moins une zone (81) prévue pour former, après pliage, une chape (47, 49).

## Patentansprüche

1. Lenksäule für Kraftfahrzeuge, umfassend:
- eine Lenkwelle (3) von gemäß einer Längsrichtung langgestreckter Form, die über ein oberes Längsende (7) mit einem Lenkrad (5) verbunden ist und ausgebildet ist, über ein unteres Längsende (17) mit einem Steuerorgan für die Orientierung der Räder des Fahrzeugs verbunden ist;
- eine Vorrichtung (9) zur Drehführung der Lenkwelle (3) in Bezug auf das Chassis (11) des Fahrzeugs um eine Längsachse;
wobei die Lenkwelle (3) mindestens einen ersten langestreckten Wellenabschnitt (35), der ein einen hohlen Kanal bildendes Teil (45) besitzt, der eine gemäß einer seitlichen Richtung, senkrecht zur Längsrichtung, gerichtete Öffnung aufweist, wobei die Öffnung (53) durch zwei Längsränder (55, 57) begrenzt ist, **dadurch gekennzeichnet, dass** der erste Wellenabschnitt (35) außerdem eine Mehrzahl von Zungen umfasst, die jeweils mit einem der beiden Längsrändern (55, 57) verbunden sind und sich über die Öffnung (53) bis zum anderen Längsrand (57, 55) erstrecken.

2. Lenksäule nach Anspruch 1, **dadurch gekennzeichnet, dass** die Zungen (51) nebeneinanderliegend gemäß einer Längsrichtung angeordnet sind und wechselseitig mit einem der zwei Längsränder (55, 57) und dem anderen der zwei Längsränder (57, 55) verbunden sind.

3. Lenksäule nach Anspruch 2, **dadurch gekennzeichnet, dass** die Zungen (51) jeweils miteinander in Kontakt sind.

4. Lenksäule nach einem beliebigen der vorhergehenden Ansprüche, **dadurch gekennzeichnet, dass** die Zungen (51) aus einem Material mit dem den hohlen Kanal bildenden Teil (45) hergestellt sind.

5. Lenksäule nach einem beliebigen der vorhergehenden Ansprüche, **dadurch gekennzeichnet, dass** die Lenkwelle (3) eine obere mit dem Lenkrad (5) verbundene Welle (13), eine untere Welle (15), die ausgebildet ist, um mit dem Steuerorgan für die Orientierung der Räder des Kraftfahrzeugs verbunden zu werden und ein zwischenliegendes Kardangelenk (23) umfasst, das die obere (13) und die untere (15) Welle drehfest miteinander verbindet, wobei der erste Wellenabschnitt (35) Teil der unteren Welle (15) ist.

6. Lenksäule nach Anspruch 5, **dadurch gekennzeichnet, dass** das zwischenliegende Kardangelenk (23) mindestens einen Gabelkopf (47) umfasst, der aus einem Material mit dem einen hohlen Kanal (40) bildenden Teil und mit den Zungen (51) des ersten Abschnitts (35) hergestellt ist.

7. Lenksäule nach Anspruch 5 oder 6, **dadurch gekennzeichnet, dass** die untere Welle (15) einen zweiten Wellenabschnitt (37) und eine Verbindung (39) umfasst, die den ersten und zweiten Wellenabschnitt (35, 37) drehfest miteinander verbindet, wobei die Verbindung (89) mindestens einen zweiten Gabelkopf (49) umfasst, der aus einem Material mit dem einen hohlen Kanal (45) bildenden Teil und mit den Zungen (51) des ersten Abschnitts (35) hergestellt ist und vorgesehen ist, ein Längsende (41) des zweiten Wellenabschnitts aufzunehmen.

8. Lenksäule nach einem beliebigen der Ansprüche 5 bis 7, **dadurch gekennzeichnet, dass** der erste Abschnitt (35) sich über eine Längslänge zwischen 25% und 75% der gesamten Längslänge der unteren Welle (15) erstreckt.

9. Verfahren zur Herstellung einer Lenksäule nach einem beliebigen der vorhergehenden Ansprüche, wobei das Verfahren mindestens die folgenden Schritte umfasst:
- Beschaffen einer im Wesentlichen ebenen Metallplatte (77);
- Zuschneiden der Metallplatte (77) derart, dass eine, von zwei im Wesentlichen zueinander parallelen Längsrändern (85) begrenzte Mittelzone (79) und eine Mehrzahl von mit den Längsrändern (85) verbundenen Seitenzonen (83) entstehen;
- Biegen der Mittelzone (79) der geschnittenen Metallplatte (77), derart, dass das den Kanal (45) bildende Teil des ersten Wellenabschnitts (35) erhalten wird;
- Biegen der Seitenzonen (83), um die Zungen zu bilden.

10. Verfahren nach Anspruch 9, **dadurch gekennzeichnet, dass** die geschnittene Metallplatte (77) mindestens eine Zone (81) umfasst, die ausgebildet ist, um nach dem Biegen einen Gabelkopf (47,49) zu bilden.

## Claims

1. Steering column for a motor vehicle, comprising:
- a steering shaft (3) which is of elongated shape in a longitudinal direction, is linked by an upper longitudinal end (7) to a steering wheel (5) and is designed to be linked, by a lower longitudinal end (17), to a component for controlling the orientation of the wheels of the motor vehicle;
- a device (9) for guiding the steering shaft (3) in rotation in relation to the frame (11) of the vehicle about a longitudinal axis;
the steering shaft (3) comprising at least one first longitudinal shaft length (35) having a part (45) that forms a hollow channel having a lateral opening (53) which faces in a lateral direction perpendicular to the longitudinal direction, the opening (53) being delimited by two longitudinal edges (55, 57), **characterised in that** the first shaft length (35) also comprises a plurality of tongues (51) which are each integral with one of the two longitudinal edges (55, 57) and extend across the opening (53) as far as the other longitudinal edge (57, 55).

2. Steering column according to Claim 1, **characterised in that** the tongues (51) are disposed side by side in the longitudinal direction and are integral, alternately, with one of the two longitudinal edges (55, 57) and with the other of the two longitudinal edges (57, 55).

3. Steering column according to Claim 2, **characterised in that** the tongues (51) are in contact with one another.

4. Steering column according to any of the preceding claims, **characterised in that** the tongues (51) are in one piece with the said part (45) that forms a hollow channel.

5. Steering column according to any of the preceding claims, **characterised in that** the steering shaft (3) comprises an upper shaft (13) linked to the steering wheel (5), a lower shaft (15) designed to be linked to the component for controlling the orientation of the wheels of the motor vehicle, and an intermediate universal joint (23) linking the upper and lower shafts (13, 15) to one another in rotation, the said first shaft length (35) forming part of the lower shaft (15).

6. Steering column according to Claim 5, **characterised in that** the intermediate universal joint (23) comprises at least one first fork (47) which is in one piece with the said part that forms a hollow channel (45) and with the tongues (51) belonging to the first length (35).

7. Steering column according to Claim 5 or 6, **characterised in that** the lower shaft (15) comprises a second shaft length (37) and a link (39) that links the first and second shaft lengths (35, 37) to one another in rotation, the said link (39) comprising at least one second fork (49) which is in one piece with the said part that forms a hollow channel (45) and with the tongues (51) belonging to the first length (35), and which is designed to receive a longitudinal end (41) of the second shaft length (37).

8. Steering column according to any of Claims 5 to 7, **characterised in that** the first length (35) extends over a longitudinal length which lies between 25% and 75% of the total longitudinal length of the lower shaft (15).

9. Method of manufacturing a steering column according to any of the preceding claims, said method comprising at least the following stages:
- obtaining a substantially flat metal plate (77);
- cutting the metal plate (77) in such a way as to create a central zone (79) delimited by two longitudinal edges (85) which are substantially parallel to each other, and a plurality of lateral zones (83) which are integral with the longitudinal edges (85);
- folding the central zone (79) of the cut metal plate (77) in such a way as to obtain the part that forms the channel (45) belonging to the first shaft length (35); and
- folding the lateral zones (83) so as to form the tongues (51).

10. Method according to Claim 9, **characterised in that** the cut metal plate (77) comprises at least one zone (81) which is designed to form a fork (47, 49) after being folded.
